# EUROPEAN PATENT APPLICATION

(11) **EP 4 717 362 A1**
(43) Date of publication of application: **01.04.2026**
(21) Application number: 25215690.6
(22) Date of filing: 03.08.2016
(51) Int. Cl.: B03D 1/02, B03D 1/06, C22B 3/00

(54) **PROCESS FOR THE DEPRESSION OF IRON SULPHIDES AND OTHER DISPOSABLE ELEMENTS IN THE CONCENTRATION OF MINERAL BY FLOTATION AND ELECTROCHEMICAL REACTOR**

(62) Divisional of application: 16382382.6
(71) Applicant: LAIN TECHNOLOGIES LTD, London W2 3SY (GB)
(72) Inventor: Laín Rodríguez, Eva María, Cambridge,, CB39EU (GB)
(74) Representative: Carlos Hernando, Borja

(57) **Abstract**

Electrochemical reactor for the depression of iron sulphides and other disposable elements in the concentration of mineral by flotation. The proposed invention represents a reactor based on the action of electrodes over the mineral, which can replace, compliment or minimise the consumption of chemical reagents, as well as improving their effect.

## Description

### OBJECT OF THE INVENTION

The present invention refers to an electrochemical reactor for the depression of iron sulphides and other disposable elements, mainly although not exclusively pyrite, in the concentration of mineral by flotation.

Such reactor, as well as the process, replace, minimise, optimise or compliment the use of depressants and other chemical reagents during the depression of iron sulphides and other disposable elements such as arsenic, antimony, bismuth, mercury and lead. This invention is particularly relevant to the flotation of sulphide minerals of all types.

The field of the invention mainly applies to nickel, copper, zinc and lead ores.

### BACKGROUND OF THE INVENTION

Flotation is used to concentrate or separate mineral species through the selective adhesion of mineral particles of each species to air bubbles. These bubbles float up to the surface of the liquid, forming froth that is collected as the product of such process. The adhesion of the particles to the bubbles happens mainly as a function of the hydrophobicity of the mineral surface. The most hydrophobic particles tend to adhere to the bubbles, thereby floating, while the more hydrophilic ones tend to get surrounded by liquid, thereby being depressed. To modulate the hydrophobicity and consequent flotation of the different mineral species, typically, chemical reagents are added, such as collectors, depressors, activators, inhibitors, frothers or modifiers [11].

In the flotation of sulphides, for example nickel, copper, zinc and lead ores, a main objective to concentrate the mineral/s of interest consists in the selective depression of pyrite (sulphur and iron mineral), as it is rarely profitable to trade the iron. In addition, pyrite and other sulphides can be associated with or contain elements that are of no interest or that are noxious, which can be penalised at a commercial level, such as arsenic, antimony, bismuth, mercury and lead. Therefore, upon eliminating/reducing such elements from the concentrate, the penalties for such elements can be diminished. Usually, the depression of pyrite and other sulphides to be discarded is achieved by the addition of chemical depressants, typically cyanide or sodium metabisulphite [10].

Several ways to depress pyrite have been devised. The main methods are the following:
- Raising the pH of the solution, for example with the addition of lime [1].
- Addition of cyanide salts, such as potassium cyanide, sodium cyanide and potassium ferricyanide [2].
- Addition of sulphur-based and oxygen-based compounds, such as sulphite, bisulphite, metabisulphite and sulphur dioxide [3], [4], [5], [6], [7]
- Addition of iron salts, such as iron sulphate or ferrous sulphate [2]
- Addition of hypochlorite salts, such as sodium hypochlorite or calcium hypochlorite [8]
- The use of organic reagents, such as starch, pyrogallic acid and tannic acid [8].

Whilst these are used at an industrial level in the concentration plants of minerals by flotation, the conventional methods for the depression of pyrite and other sulphides through the addition of chemical depressants present several disadvantages. Firstly, these entail relatively high costs of consumables, as well as of the process water treatment in order to clean and adequate it for reutilisation in the flotation circuits. Moreover, the use of certain depressants such as cyanide is increasingly restricted, due to its toxicity and associated environmental risk [9].

The process object of the present invention entails a great advantage versus the conventional methods, given that it makes it possible to save on chemical reagents, which currently represent a significant cost. Specifically, the proposed process and reactor represent an electrochemical method for the depression of pyrite and other disposable sulphides, which does not necessarily employ chemical depressants.

The choice of electric potential enables using any value of potential, unlike with chemical reagents, which are limited to discrete values of potential. In addition, it enables varying the pH and the electrochemical potential in an independent fashion, not just at a macro level but also at a local level. Consequently, this process enables a higher specificity in the action of depression, increasing the resolution in the differential flotation between the minerals of interest and the unwanted sulphides. Therefore, it allows optimising the grade-recovery relation of the metals of interest, offering greater benefits starting from the same input ore. In addition, not only is the treatment of the minerals introduced in the plant optimised; the improvement in the quality of the concentrate can allow the reclassification of certain minerals, previously considered sterile due to not making the quality cut, resulting in the treatment at the plant of minerals that would otherwise be discarded. On the one hand, this could entail important savings, as less mineral would be moved to generate the same product; on the other hand, this could simplify the logistics of the mine, due it no longer being necessary to avoid or blast and discard certain areas, currently considered sterile. Likewise, the blending of better and worse concentrates in order to obtain certain quality levels could be prevented or minimised.

Another advantage is the speed in changing the electric potential, which enables a fast response (virtually instantaneous) by the flotation process control system, which is relatively slow (typically minutes or hours) in the current system, as it is dependent on the concentration and flow of reagents, which can remain recirculating in the system during relatively long periods of time.

Moreover, this process allows a greater versatility in the flotation circuits, given that the process water is not chemically conditioned like it currently is, being able to vary the flotation conditions with a greater ease in a modular fashion, in the same circuit, line or treatment plant.

### DESCRIPTION OF THE INVENTION

The present invention concerns an electrochemical reactor, according to claim 1, for the depression of iron sulphides and other elements to be discarded, mainly although not exclusively pyrite, in the concentration of mineral by flotation, which replaces, minimises, optimises or compliments the use of depressants and other chemical reagents. This invention is particularly relevant for the flotation of sulphide minerals of all types.

The process is based on the application of electric potential by at least one electrode, to simulate the electrochemical effect that the chemical depressants and other reagents have on the mineral particles. Therefore, through the direct contact between the electrode and mineral particles, altering the surface of the mineral that we wish to depress is attained, such that its hydrophilic character is increased, thus avoiding its adhesion to the bubbles, resulting in its depression.

As mentioned, the process consists in the application of potential, by means of a working electrode, in situ or ex situ, directly or indirectly, on the mineral particles in the pulp. Such application requires either the direct contact between the electrode and the mineral, which happens with a higher probability if the particles are in movement, for example by agitation, or by the transference of potential by means of electrochemical mediators.

In the process, which is typically electrolytic although it can also be galvanic, the working electrode is polarised to certain values of potential. These values are chosen in order to condition the surface of the pyrite species or other sulphides to be discarded, with the aim of increasing the hydrophilic character of such surface. Typically, the intention is to catalyse the selective formation of hydroxides on the surface of the pyrite. For that, the potential of choice is usually positive; the working electrode acts as anode. Also, such potential would typically lie below the potential of electrolysis of water, so that bubbles are not generated on the surface of the electrode and the pH does not change. It is worth mentioning that the application of potential is a pH-independent variable, at least at the macro level (although it would be possible to modify the pH at a macro level, any changes in pH would typically occur at a local level), which enables a higher resolution in the differential flotation of the subject minerals.

The process is based on the use of an electrochemical cell in the mineral pulp circuit, at any point thereof, be it in the flotation cells or in conditioning or passing tanks or pipes upstream of, downstream of or intercalated in the process, whether pre-existent or added.

The electrochemical reactor may take any form, from a simple reactor of two parallel flat electrodes, to more complex apparatus, such as column, packed bed and/or multi-tubular reactors, and/or that constitute or take advantage of at least part of the elements of the mineral treatment line, such as for example the flotation cells, containers or passages of pulp and mills, including any structure or element in the plant or line/circuit of treatment. For example, the following may be coated and/or used as electrode/s: deflectors, pipes, passages, conditioning tanks, thickeners/cyclones, air or mineral dispersers, stirrers, false floors, sieves/filters, linings or elements of the mills such as the balls and rods.

The electrodes may be made of any conductor or semiconductor material, and they can be treated for example to modify the affinity with the pulp and/or mineral species and/or liquid(s), for example through (pre) treatment/s to increase the hydrophobicity or hydrophilicity of the surface, as well as modified/treated/impregnated/associated/doped with catalysers or modifiers of potential, activation energy or other energetic or thermodynamic considerations. Likewise, the electrodes may be magnets or be magnetised, optionally to preferentially attract or repel certain mineral species.

Such electrodes may take any form, from flat sheets (smooth, perforated or articulated), to the shape of existing structures from the line/s of treatment (or lining of these). In addition, the surface can be maximised or modulated by the use of electrodes with three-dimensional surfaces, perforated surfaces or surfaces of particular rugosity. The electrodes may be assisted by systems, in situ or ex situ, for their cleaning and/or maximising/modifying current efficiency, for example mechanical systems to maintain the surface clean, prevent/correct/minimise/act on impurities or aggregates, such as for example brushes or systems of vibration/ultrasound for the release of particles/adhered species, and/or systems to prevent/correct/mitigate/act on physicochemical inconveniencies, such as for example programs to vary the potential/s against passivation layers formed on or from the electrode/s or chemical treatment systems. The electrochemical reactor as well as the elements that host it may count with safety systems to prevent, mitigate or act in the event of electric discharge or short circuit, such as separators, rubber coatings, insulative coatings, ground wires, fuses and intelligent systems to guarantee safety. Likewise, the reactor may count with mechanical supports that are adequate for the correct anchoring of its components.

The process has two main modalities. In the first one, the potential is conferred to the mineral directly by the electrode. This requires direct contact between the mineral and the electrode. In the second modality, the potential is conferred to the mineral by means of chemical/electrochemical mediators, typically dissolved in the medium, added or already present in the medium (for example thiosalts), although they can also be conductor or semiconductor solids, again being added or already present (for example mineral particles), or a combination of these. Likewise, the process allows the combination of the two modalities, both simultaneously, sequentially, in series and/or in parallel, using the same reactor or different reactors.

In the case of requiring direct contact between the electrode and the mineral, the electrochemical reactor may be assisted by additional mechanisms in order to promote/maximise/force such contact. These mechanisms may for example be stirrers and/or pumping and/or mixing and/or aeration and/or bubbling and/or vibration systems to promote/maximise the contact, and/or press filters and/or other types of presses and/or filters to force such contact or physicochemical methods to modulate the affinity between the electrode and the mineral, for example the modulation of hydrophobicity or the magnetising of the electrode, optionally to selectively propitiate the affinity (or lack thereof) with certain mineral species.

By means of the process subject of this invention, several objectives may be attained:
- The first objective of the process is the depression of iron species, mainly pyrite, to increase the grade of the metal of interest in the concentrate. For that end, potentials are applied on the mineral, in a direct and/or indirect fashion, which cause the surface of the species that we wish to depress to become more hydrophilic, preferably in a selective way, preventing or minimising such effect on the minerals of interest to be floated. This effect can be performed both in the presence or absence of reagents and/or pH modifiers, acting independently or in collaboration with such agents. For example, one way of selectively depressing pyrite is to catalyse the formation of hydroxides on its surface, which renders it more hydrophilic. In addition, potentials to positively or negatively charge certain mineral species can be applied; depending on the charge of the collector/s and/or reagent/s, this will lead to their flotation or depression.
- The second aim of the process is the depression of species that contain or are associated with unwanted elements, mainly penalising elements such as arsenic, antimony, bismuth and mercury, as well as elements discarded due to economic or logistic considerations (for example differential flotation) such as zinc and lead. For that end, as for the depression of iron species, potentials are applied on the mineral, in a direct and/or indirect fashion, which cause the surface of the species that we wish to depress to become more hydrophilic, preferably in a selective manner, preventing or minimising such effect on the minerals of interest to be floated. Again, this effect can be performed both in the presence and absence of reagents and/or pH modifiers, acting independently or in collaboration with such agents.
- The third objective of such process is the purge of metals in solution or other substances that we wish to clean, through their deposition/precipitation, optionally selective (for example by the choice of separator and/or potential/s), preferably within a compartment in the relevant configurations, preferably by electrodeposition over/constituting the cathode. For example, the purge of copper in solution through its electrodeposition on the cathode allows minimising the activation of sphalerite, enabling at the same time the recovery of copper in a useful way. Such cleaning is not restricted to the elimination of these substances from solution, but also includes their transformation to other forms that do not imply or that minimise problems derived from these, and/or that cheapen their management (for example, the oxidation of thiosalts).
- The fourth objective of the process is to promote the recovery of metals or substances of interest, by propitiating flotability, for example by means of positively charging the minerals, optionally by allowing less alkaline ranges of pH to obtain the same grade of the metal of interest in the final concentrate, optionally in the presence of reagents such as for example negatively charged collectors.
- The fifth objective is the saving/optimising of certain reagents, either by eliminating their addition, minimising it or maximising its effectiveness, such as for example lime and/or certain collectors, depressors, modifiers or chemical reagents/additives. Such optimisation may take place in the totality or in any part of the process, for example minimising the lime and/or the depressors in the rougher flotation but maintaining, nonetheless, the conventional levels of these reagents downstream of regrinding/ in the cleaner flotation. An additional advantage of this is the higher recovery of the metals and/or substances of interest, for example by achieving a higher recovery at least in the rougher concentrate as a consequence of undertaking it at a less alkaline pH, which, as made possible by this process, would not impair the grade of the metal of interest in the concentrate. This fifth objective consists in improving the resolution in the separation of mineral species, by adding one more dimension (potential) to differential flotation, which is possible since pH and potential are independent variables, as in this process we are typically below the potential of water hydrolysis, and if the pH changes, it can be guaranteed for this to occur exclusively at a local level, and not at a general/macro level. This is not possible in conventional flotation, as the potential tends to be linearly dependent on pH. Hence, in order to lower the potential, the pH must necessary be alkalinised and vice versa, which tends to be negative at the recovery level (if the solution is alkalinised), or at the metal or substance of interest grade level in the final concentrate/s (if the solution is acidified). This leaves a window open for the improvement of grade and recovery as a whole, which is achieved with the use of this process.

Finally, the industrial configuration would be the implementation of the process both in a passage (for example a pipe or expansion/compartment that hosts the subject reactor, optionally by means of perforated or ring-shaped electrodes or of favourable configurations at the hydrodynamic level) or a conditioning tank upstream the rougher flotation, or in a passage as that previously described or in a conditioning tank prior to any stage of the cleaner flotation and/or scavenger flotation. The reactor may be configured as a combination and/or matrix of the morphological unit(s).

The reactor may be installed parallel to the walls of the tank or compartment containing the pulp or through which the pulp passes, and/or constituting/ taking advantage of at least part of these, and/or disposed in any fashion, for example in such a way as to maximise the surface of electrode per volume of pulp, optionally employing mosaics of reactors, column and/or bed configurations (e.g. Packed, percolating, slurry phase and/or bubbling), configurations that are (multi) tubular, sieving, and/or to promote/modulate the hydrodynamics in the tanks or passages, optionally taking advantage or acting as deflector(s). The reactor may take any form, from a simple configuration of two parallel flat electrodes, to more complex apparatus, such as a reactor that constitutes and/or takes advantage of at least part of the structures and/or elements of the mineral treatment line(s), such as the flotation cells, tanks, containers or passages of pulp, including any element in the plant or line/circuit of treatment, such as pipes, conditioning tanks, elements such as for example air dispersers, stirrers, false floors, deflectors, linings and/or structures, and/or elements of the mills such as the balls, the rods and/or structures.

Mechanical/physical, electrical and/or chemical parameters of the system may be controlled by intelligent control systems, optionally remote, in order to monitor and adjust the reactor. In addition, automated transport systems can be employed, for processes such as the distribution of mineral to the electrode, the recirculation of the pulp, liquid/medium and/or solids, and/or extraction/ cleaning/ replacement/ movement/ modification/ regeneration of electrodes or other elements of the reactor. Furthermore, the design of the reactor could allow changing the separator/s, electrodes and/or other constituting elements without the need for disassembly.

### DESCRIPTION OF THE FIGURES

To complement this description and with the aim of aiding towards a better understanding of the characteristics of the invention, in accordance with an example of preferred embodiment, this description is accompanied, as an integrant part of it, by a set of figures where, with illustrative and not limitative character, the following is represented:
Figure 1 shows a first example of reactor formed by a simple electrochemical cell.
Figure 2 shows a second example of reactor formed as well by a simple electrochemical cell.
Figure 3 shows a third example of reactor that is a variation of the first example.
Figure 4 shows a fourth example that is a combination of the second and third previous examples of the reactor.
Figure 5 shows a fifth example of reactor that is a variation of the third example.
Figure 6 shows a sixth example of reactor that is a combination of the second and fifth examples.
Figure 7 shows an example of disposition of the reactors within a tank (e.g. conditioning tank).
Figure 8 shows an example of disposition of the reactors within a passage (e.g. column reactor).
Figure 9 shows a blocks diagram of the process of iron sulphide depression.

### PREFERRED EMBODIMENTS OF THE INVENTION

The present invention refers to an electrochemical reactor for the depression of iron sulphides and other disposable elements in the flotation of mineral particles in liquid, through a process which would typically take place after the stages of extraction, crushing, grinding and suspension in liquid of the mineral.

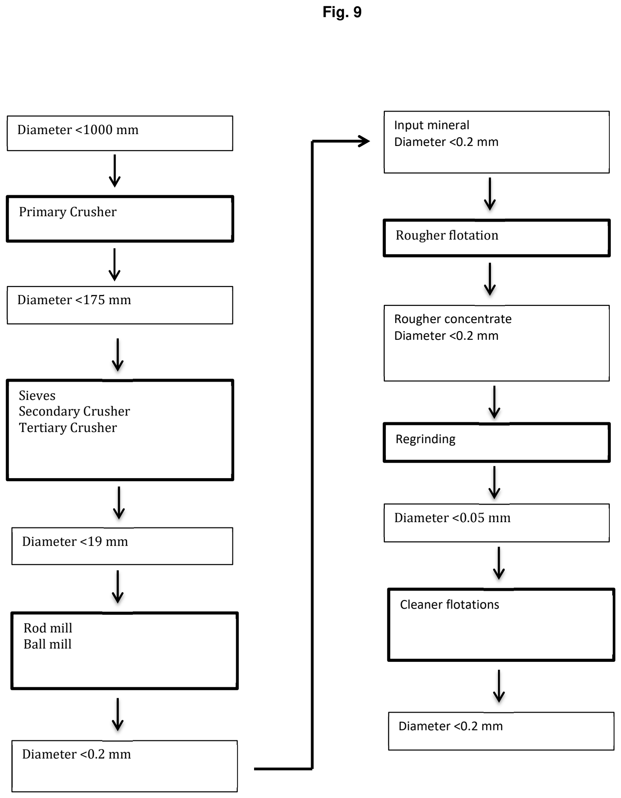

An example of such processing for copper ores is presented below, illustrated in figure 9. Firstly, mineral that is rich in copper sulphides would be extracted from the mine by blasting. Subsequently, such mineral would be transported to the primary crusher by Dumper lorries, where the diameter of the mineral particles would be reduced from approximately less than 1000 mm down to less than 175 mm. The product of the primary crusher would be sieved such that those particles with a diameter larger than 65 mm would pass by the secondary crusher, yielding particles of diameter below 65 mm. Such particles would pass by the tertiary crusher, yielding in turn particles of diameter below 19 mm.

The next step would be a grinding stage, either in a rod mill or a ball mill, to produce particles of diameter below 0.2 mm. The next step would be the agitation of the mineral pulp in a conditioning tank prior to the rougher flotation, which would be an ideal moment for the application of electric potential. In this way, the particles could be conditioned before the first flotation. The product of the rougher flotation is the rougher concentrate, the main objective of which is to eliminate most of the gangue (mainly silicates), as well as part of the iron sulphides (pyrite in particular).

The product of the rougher flotation would be subjected to a regrinding stage, where the diameter of the particles would be reduced from below 0.2 mm down to less than 0.05 mm. Subsequently, the mineral pulp is stirred in a conditioning tank, previously to the three cleaner flotations and the scavenger flotation. Again, such tank could be used for the application of electric potential, with the aim of conditioning the mineral before the cleaner flotations. Likewise, conditioning tanks or intermediate passages where electric potential would be applied could be introduced, for example between the first and second cleaner flotations, as well as between the second and third cleaner flotations. The product of the flotation process, after thickening and filtration stages, is the final concentrate, which would typically be composed by copper sulphides such as chalcopyrite and chalcocite, containing at least 20% of copper.

The previously described process incorporates at least a reactor for the application of electric potential. Such reactor can take different configurations. Below, some of the possible reactor configurations are cited. In all of the reactor configurations, the mineral may or may not contact the electrode, although the first of the options is the preferred one. As mentioned, the option of contact consists in the particles touching the electrode, which can be achieved by agitation or movement of the pulp, thereby guaranteeing the contact, at least during an instant. In the configuration without contact or the indirect configuration, an electrochemical mediator is used, whether present or added, to transfer the electric potential from the electrode to the mineral particles. In this case, the direct contact between the mineral and the electrode is not necessary. In any case, if an electrochemical mediator is used, it will also be possible to use a reactor with direct contact, although in that case it would not be necessary to guarantee the contact from a hydrodynamic point of view. Other options would be to use a reactor ex situ or to coat the electrode of interest with a separator in order to prevent direct contact with the mineral.

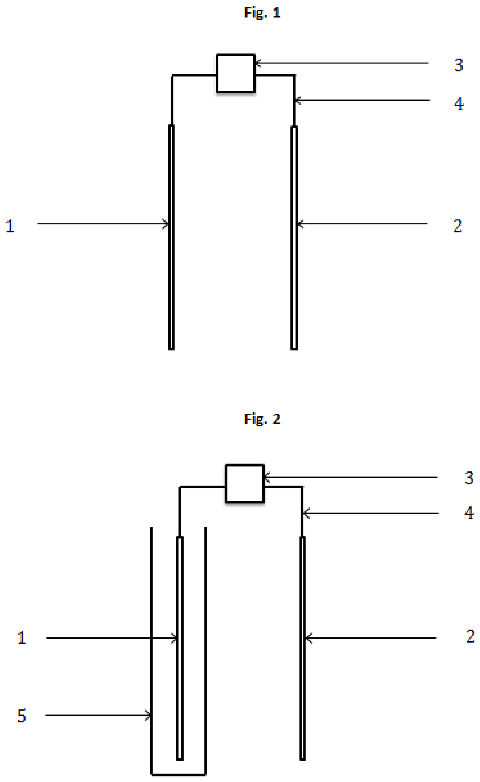

The first reactor configuration is a simple electrochemical cell. Such cell, illustrated in figure 1, consists of a counter electrode (1), a working electrode (2), a source of electricity (3) and at least one connection between these three elements (4). In this example, the anodic and/or cathodic and/or medium and/or cell potentials can be controlled with a potentiometer and/or potentiostat, and/or with any electric supply/circuit/electric component (battery, plug, rectifier, etc. that can be assisted by a potentiometer and/or potentiostat).

The second reactor configuration is a simple electrochemical cell, where at least one of the electrodes is, partially or totally, isolated from the pulp medium and/or other electrode(s) and/or liquid by a separator/s. Such cell, illustrated in figure 2, consists of a counter electrode (1), a working electrode (2), a source of electricity (3) and one connection/s between these three elements (4), where the anode and/or cathodic and/or medium and/or cell potentials can be controlled with a potentiometer and/or potentiostat, and/or with any electric supply/circuit/electric component (battery, plug, rectifier, etc. that can be assisted by a potentiometer and/or potentiostat). In addition, it counts with a separator/s (5), which can be constituted by ion exchange membrane(s), for example anionic or cationic exchange membranes, both generic as well as for ions/elements/specific compounds, fluid membrane(s), organic phase(s), dialysis membrane(s), rack(s), sheet(s) or perforated structure(s), ionic bridge(s), filter(s), sponge(s), (porous) separator(s) for bacteria or any type thereof, or a combination of these. Such separators may be placed at a certain distance from the electrode(s), e.g. finite-gap configuration, or in direct contact with the electrode(s), e.g. zero-gap configuration, or as a combination of these.

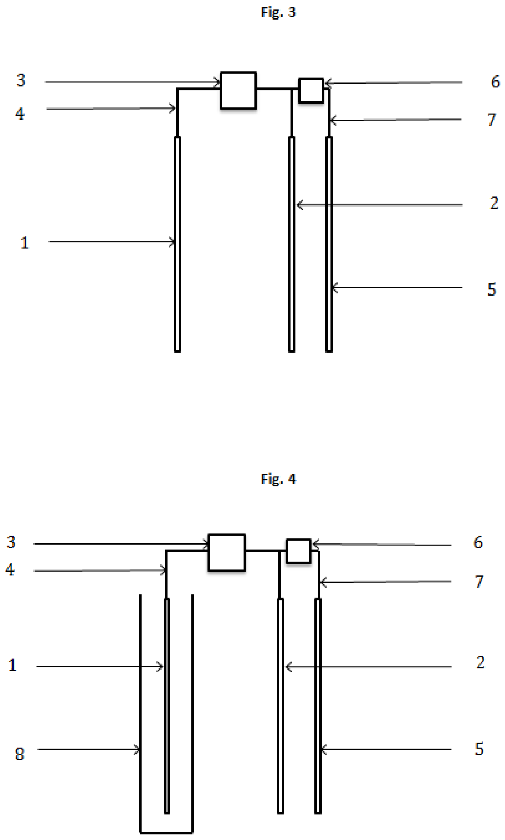

The third reactor configuration is a variation of the first configuration. Such cell, illustrated in figure 3, counts with the same elements as the first configuration (a counter electrode (1), a working electrode (2), a source of electricity (3) and a connection(s) between these three elements (4), wherein the anodic and/or cathodic and/or medium and/or cell potentials can be controlled with a potentiometer and/or potentiostat, and/or with any electric supply/circuit/electric component (battery, plug, rectifier, etc. that can be assisted by a potentiometer and/or potentiostat)). In addition, it counts with a third electrode (5), optionally a reference electrode such as for example silver/silver chloride, connected to at least one of the electrodes via a connection(s) (7), and of an element (8) to measure the potential difference between the working electrode and the third electrode and/or between the counter electrode and the third electrode. Such element (6) is preferably a voltmeter or a multimeter, and it can count with/be connected to/collaborate with feedback/response/monitoring/adjustment systems related with the control system for the anodic and/or cathodic and/or medium and/or cell and/or partial ionic and/or pulp and/or zeta potential(s) or a combination of these.

The fourth reactor configuration is a combination of the second and third configurations. Such cell, illustrated in figure 4, counts with the same elements as the third configuration (a counter electrode (1), a working electrode (2), a source of electricity (3) and a connection(s) between these three elements (4), where the anodic and/or cathodic and/or medium and/or cell potentials can be controlled with a potentiometer and/or potentiostat), and a third electrode (5), optionally a reference electrode such as for example silver/silver chloride, connected to at least one of the electrodes by a connection(s) (7), and of an element (6) to measure the potential difference between the working electrode and the third electrode and/or between the counter electrode and the third electrode. Such element (6) is preferably a voltmeter or multimeter, and can count with /be connected to /collaborate with feedback /response /monitoring /adjustment systems related with the control system for the anodic and/or cathodic and/or medium and/or cell and/or partial ionic and/or pulp and/or zeta potential(s) or a combination of these. In addition, as for the second configuration, it counts with separator/s (8), which again can be constituted by ion exchange membrane(s), for example anionic or cationic exchange membranes, both generic as for ions/elements/specific compounds, fluid membrane(s), organic phase(s), dialysis membrane(s), rack(s), sheet(s) or perforated structure(s), ionic bridge(s), filter(s), sponge(s), (porous) separator(s) for bacteria or of any type, or a combination of these. Such separators may be placed at a certain distance from the electrode(s), e.g. finite-gap configuration, or in direct contact with the electrode(s), e.g. zero-gap configuration, or as a combination of these.

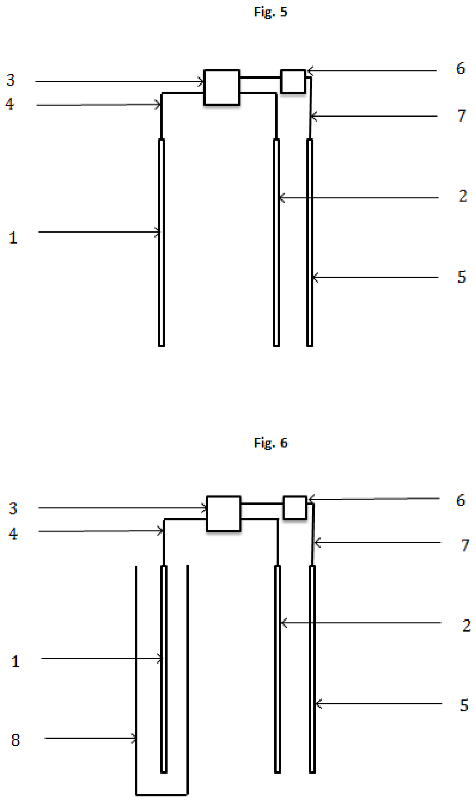

The fifth configuration of the reactor is a variation of the third configuration. Such cell, illustrated in figure 5, counts with the same elements as the third configuration. However, the configuration of such elements is different. As for the third configuration, the reactor counts with a counter electrode (1), a working electrode (2), a source of electricity (3) and a connection/s between these three elements (4), where the anodic and/or cathodic and/or medium and/or cell and/or partial ionic and/or pulp and/or zeta potentials or a combination of these can be controlled with a potentiometer and/or potentiostat, and/or with any electric supply/circuit/electric component (battery, plug, rectifier, etc. that can be assisted by a potentiometer and/or potentiostat). In this case, the third electrode, typically a reference electrode (5), is connected to the electric source (3) either directly or at a distance, optionally by a connection/s (7). The electric source can count with or be connected/coupled to a potentiostat/potentiometer/rheostat or any monitoring/control/adjustment system, optionally to modify the cell potential as a function of and/or to control/adjust the anodic and/or cathodic and/or medium and/or cell and/or partial ionic and/or pulp and/or zeta potentials or a combination of these.

The sixth reactor configuration is a combination of the second and fifth configurations. Such cell, illustrated in figure 6, counts with the same elements as the fifth configuration (a counter electrode (1), a working electrode (3), an electric source (3), a connection/s between these three elements (4), where the anodic and/or cathodic and/or medium and/or cell potentials can be controlled with a potentiometer and/or potentiostat, and/or with any electric source/circuit/electric component (battery, plug, rectifier, etc. that can be assisted by a potentiometer and/or potentiostat), and a third electrode (5), optionally a reference electrode such as for example silver/silver chloride, connected to the electric source (3) either directly or at a distance, optionally by a connection/s (7). The electric source can count with or be connected/coupled to a potentiostat/potentiometer/rheostat or any monitoring/control/adjustment system, optionally to modify the cell potential as a function of and/or to control/adjust the anodic and/or cathodic and/or medium and/or cell and/or partial ionic and/or pulp and/or zeta potentials or a combination of these). In addition, as for the second configuration, it counts with separator/s (8), which again can be constituted by ion exchange membrane(s), for example anionic or cationic exchange membranes, both generic as for ions/elements/specific compounds, fluid membrane(s), organic phase(s), dialysis membrane(s), rack(s), sheet(s) or perforated structure(s), ionic bridge(s), filter(s), sponge(s), (porous) separator(s) for bacteria or of any type, or a combination of these. Such separators may be placed at a certain distance from the electrode(s), e.g. finite-gap configuration, or in direct contact with the electrode(s), e.g. zero-gap configuration, or as a combination of these.

The reactor of any configuration uses at least one anode and at least one cathode, and is electro-assisted by applying and/or controlling a source of electric energy, to control and/or measure and/or modulated one or more of (i) cell potential(s), (ii) partial and/or relative and/or half-cell anodic potential(s), (iii) partial and/or relative and/or half-cell cathodic potential(s), (iv) medium potential(s), (v) partial potential(s) of species in solution, (vii) pulp potential(s) and (viii) zeta or mineral particle surface potential(s).

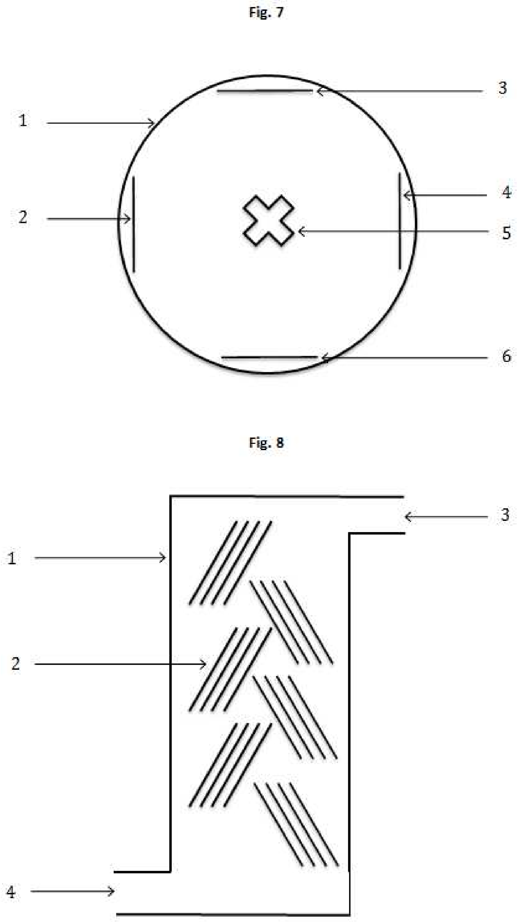

A simple example of its use, as illustrated in figure 7, consists in the introduction of several electrochemical reactors in a tank (1) with stirrer (5). The reactors (2,3,4 and 6) could be arranged next to the tank wall, thereby (directly or indirectly) applying the potential to the mineral particles in a conditioning stage, for example previous to or intercalated in the rougher flotation or other flotations, for example the selective, washes, scavenger, spent, etc. flotations. Any possible cell form and configuration could be employed, as well as any disposition of the different reactors, without necessarily placing these in parallel to the tank walls.

For example, the process could be employed in the conditioning tank previous to the rougher flotation. In this tank, it would be normal for around 800 to 1,200 tons of mineral to enter every hour, at 20-40% of weight/volume in water. If it is a copper ore, the input mineral would typically contain between 0,4 and 2%, between 2 and 30% of sulphur, between 1 and 20% of iron, between 0,1 and 5% of zinc as well as gangue (typically silicates) and other elements in lower quantities.

The input mineral into the tank typically has a D80 between 100 and 250 µm. It is agitated for about 2 to 5 minutes in this tank, before flowing into the rougher flotation. After the application of potential in such conditioning stage, for example between 1 and 10 V between the anode and the cathode, the copper grade of the concentrate could be increased several points (e.g. from 20% to 24% copper without and with the reactor, respectively), as well as increasing the recovery of copper several points (e.g. from 86% to 88% without and with the reactor, respectively). In addition, a lower pH could be used in the rougher flotation, maintaining the same grade (for example 20%) yet increasing the recovery (e.g. an increase between 4 and 6 %). Usually, this would not be possible without using the reactor, given that upon lowering the pH, the copper grade in the concentrate would decrease. On the one hand, the use of a lower pH in the rougher flotation (e.g. pH 10 instead of pH 11.5) would enable an important saving in lime (typically several tons of lime per day), at the same time as obtaining a larger benefit from the same input mineral to be treated (typically with 1% of copper, which is concentrated up to 20%), given that less copper would be discarded. On the other hand, if we used this process to increase the copper grade in the concentrate, the use of depressors such as sodium metabisulphite (e.g. 400 g/tons of reground mineral) could be reduced or even completely eliminated.

Another example of use, illustrated in figure 8, involves the introduction of pulp in a passage, for example a column reactor (1), which contains one or more electrochemical cells (2) that can take any form. The pulp would be introduced at least via one entry (3) and would exit at least via one exit (4). The electrodes could take any form, making use for example of large specific surfaces.

### References:

[1] I.N. Plaksin and G. A. Miasnrkova; "Some Data on Depression of Pyrite by Lime"; Academy of Sciience SSSR, No. 4 (1956)
[2] K. Milena; "Depression of pyrite mineral with cyanide and ferrous/ferric salts"; Underground Mining Engineering 19 (2011) 149-155
[3] S.R. Grano, N.W. Johnson, J. Ralston; "Control of the solution interaction of metabisulphite and ethyl xanthate in the flotation of the Hilton ore of Mount Isa Mines Limited, Australia"; Minerals Engineering, 10, No.1, 17-45 (1997a).
[4] S.R. Grano, C.A. Prestidge, J. Ralston; "Solution interaction of ethyl xanthate and sulphite and its effect on galena flotation and xanthate adsorption"; International Journal of Mineral Processing, 52, 161-186 (1997b).
[5] T.N. Khmeleva, D.A. Beattie, T.V. Georgiev, W.M. Skinner; "Surface study of the effect of sulphite ions on copper-activated pyrite pre-treated with xanthate"; Minerals Engineering, 16, 601-608 (2003)
[6] T.N. Khmeleva, W.M. Skinner, D.A. Beattie; "Depression mechanisms of sodium bisulphite in the xanthate-collectorless flotation of copper activated sphalerite"; International Journal of Mineral Processing, 76, 43-53 (2005)
[7] T.N. Khmeleva, J.K. Chapelet, W.M. Skinner, D.A. Beattie; "Depression mechanisms of sodium bisulphite in the xanthate-induced flotation of copper activated sphalerite"; International Journal of Mineral Processing, 79, 61-75 (2006)
[8] A. Guanghua, Y. Zhou, Y. Wang; "A Study on the Combined Depressant for the Cu-S Separation in Low Alkaline Medium and its Depressing Mechanism"; Procedia Engineering, Volume 102, Pages 338-345 (2015)
[9] B. Ball, R.S. Rickhard, edited by M.C. Fuerstenau; "A. M. Gaudin Memorial Volume"; American Institute of Mining Metallurgical and Petroleum Engineers, New York, 458 (1976).
[10] M. C. Fuerstenau, G. J. Jameson, R. Yoon ; "Froth Flotation: A Century of Innovation"; SME (2007)
[11] S. Ramachandra Rao; "Surface Chemistry of Froth Flotation: Volume 1: Fundamentals"; Springer Science & Business Media, Jun 29 (2013)

## Claims

1. Electrochemical reactor for the treatment of mineral pulp, with the aim to depress sulphides of iron and other disposable elements in the flotation of mineral particles in liquid or pulp, **characterised in that** it comprises:
- At least one counter electrode (1),
- At least one working electrode (2),
- At least one electric source (3),
- At least one connection between these three elements (4), and
- At least one separator at a certain distance from at least one electrode or placed in direct contact with at least one electrode, to partially cover o delimitate in a compartment to isolating the at least one electrode from the mineral particles in the liquid or pulp.

2. Reactor, according to claim 1, **characterized in that** the electrodes are replaceable.

3. Reactor, according to claim 1 or 2, **characterized in that** it comprises a reference electrode connected to at least one of the electrodes and connected to an element to measure the potential differences.

4. Reactor, according to previous claims, **characterized in that** the electrodes are parallel.

5. Reactor, according to previous claims, **characterized in that** comprises a potential control system.

6. Reactor, according to previous claims, **characterized in that** comprises a mixing or agitation system.

7. Reactor, according to previous claims, **characterized in that** comprises at least one entry and at least one exit for continuous flow of mineral liquid or pulp.

8. Reactor, according to previous claims, **characterized in that** it is connected in series or in parallel with further reactors.

9. Reactor, according to previous claims, **characterized in that** the separator prevents, mitigates or acts in the event of electric discharge or short circuit.

10. Reactor, according to previous claims, **characterised in that** such separator can be an ion exchange membrane(s), for example anionic or cationic exchange membrane(s), dialysis membrane(s), liquid membrane(s), organic phase(s), rack(s), ionic bridge(s), filter(s), sponge(s), (porous) separator(s) for batteries or of any type, or a combination of these, disposed in any manner, including zero-gap and finite-gap configurations.
